# EUROPEAN PATENT APPLICATION

(11) **EP 3 040 013 A1**
(43) Date of publication of application: **06.07.2016**
(21) Application number: 15197249.4
(22) Date of filing: 01.12.2015
(51) Int. Cl.: A47L 15/42, A47L 15/48, H05B 3/14

(54) **HOUSEHOLD APPLIANCES HEATING METHOD AND RELATED WASHING MACHINE**

(30) Priority: 31.12.2014 IT TO20141129
(71) Applicant: Indesit Company S.p.A., 60044 Fabriano (AN) (IT)
(72) Inventor: BOMBARDIERI, Giovanni, 24021 Albino (BG) (IT); FILIPPONI, Paolo, 60044 Fabriano (AN) (IT); LIBERATORE, Aldo, 67035 Pratola Penigna (AQ) (IT)
(74) Representative: Ferroni, Filippo

(57) **Abstract**

The invention relates to a method for heating water in a dishwasher (1) by using a resistor (15) made of carbon fiber.

The resistor is applied to the bottom (4) of the tub (3), so as to cover a large surface exchanging heat with the water to be heated, for better thermal efficiency.

The invention also relates to a dishwasher implementing the heating according to the method.

## Description

The present invention relates to a heating method and a heating apparatus particularly intended for household appliances.

As is known, regulations pertaining to the energy consumption of household appliances are nowadays rather restrictive; household appliance manufacturers are thus compelled to constantly and systematically look for new technical solutions leading to reduced or anyway limited energy and water consumption.

For this reason, some washing machines and dishwashers include low-consumption wash and/or rinse cycles, with recirculation of a part of the water in the tub; similar measures are taken, *mutatis mutandis*, also for drying the load in clothes dryers and washing/drying machines, wherein the management of the heated air is optimized by recovering a part of the water circulating in the load chamber: in this way, the energy used for heating the air is not wasted by discharging it into the outside environment as soon as it has flowed through the chamber, as was the case in the past.

In this frame, the Applicant's attention has focused on reducing the energy consumption for the heating of household appliances.

As is known, in fact, fluids (water, steam and/or air) are heated in dishwashers mainly by means of heat generated by electric resistors.

The latter may be of different types depending on the application, but they are usually configured as bars bent in a serpentine fashion, inside of which the actual electric resistor is arranged, buried in refractory zirconium-based or silicon-based powders or the like.

This type of resistor has proven to be effective and reliable over time, although it has a few drawbacks.

In fact, the thermal inertia and the time necessary to reach the required temperature values are not always suited to the various needs: for example, as can be easily understood, the wash cycles of a dishwasher and the cooking cycles of an oven may require different times and operating modes even when the respective resistors are substantially similar from a structural viewpoint.

Furthermore, as far as consumption is concerned, the resistors known in the art do not appear to be an optimal solution, also because they are rather rigid both from a structural viewpoint, due to the above-mentioned configuration, and from a functional viewpoint, since such a configuration does not allow them to be effectively used in the phases of the operating cycle, so that they can be adapted to variable conditions.

In fact, it can be easily understood that the heating conditions of the water at the beginning of the wash cycle of a dishwasher are different from the heating conditions of the air for drying the crockery at the end of the cycle, even though the heating resistor in use is the same.

The present invention aims at improving this state of the art; in other words, the technical problem at the basis of the invention is to provide a new method for heating the water and/or the air and/or the steam in dishwashers, with such operating features that allow overcoming the above-mentioned limitations of the prior art.

The idea that solves this problem is to use electric resistors which are different from traditional ones, and which consume less energy and/or are equally or more efficient than the latter.

Within the scope of this general principle, the Applicant has found a solution that uses means which are suitable for providing heat by electric dissipation (i.e. Joule effect) and through radiating energy, in particular in the infrared range, during the various operating steps of the dishwasher.

It has been demonstrated that electric resistors based on non-metallic materials can achieve good results; among such materials, composite fibers based on carbon, boron or the like are particularly effective.

In this respect, it must be pointed out that the Applicant knows that these fibers are used for civil heating applications and also for parts of machinery, such as, for example, the defrosting systems for aircraft wings described in American patent US 4,737,618.

However, the Applicant does not know of any application to household appliances, in particular for heating fluids in household appliances.

According to the invention, it is possible to create heating systems that are functionally flexible, so that they can be easily adapted to the various steps of the operating cycle of household appliances, in particular dishwashers, in order to reduce their energy consumption and improve their thermal efficiency.

The features of the invention are specifically set out in the claims appended to this description; all such features will become more apparent in the light of the following description of a few embodiments shown in the annexed drawings, wherein:
- Fig. 1 is an axonometric view of the lower part of the structure of a dishwasher to which the heating according to the invention has been applied;

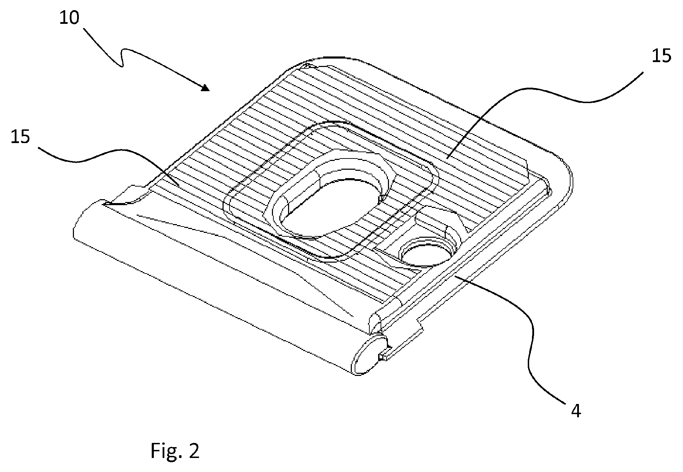

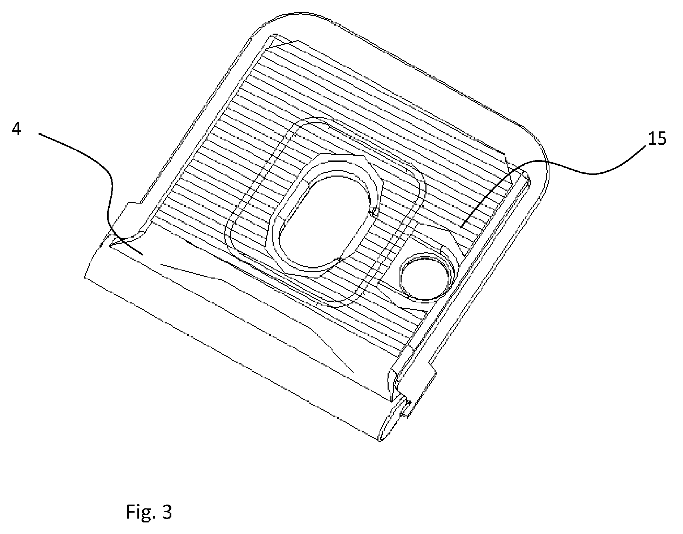

- Figs. 2 and 3 are axonometric views from different angles, which show the heating of the dishwasher of Fig. 1;
- Fig. 4 shows a second application of the heating according to the invention to a dishwashing machine;
- Figs. 5, 6 and 7 show a detail of the second application of the heating of Fig. 4 to a dishwasher;
- Fig. 8 is a diagram that illustrates the second application of the heating of the dishwasher of Figs. 4-7;
- Figs. 9 and 10 show a further variant of application of the heating of the invention to a dishwasher.

With reference to the above-listed drawings, reference numeral 1 designates as a whole the structure of a dishwasher to which the heating of the invention has been applied.

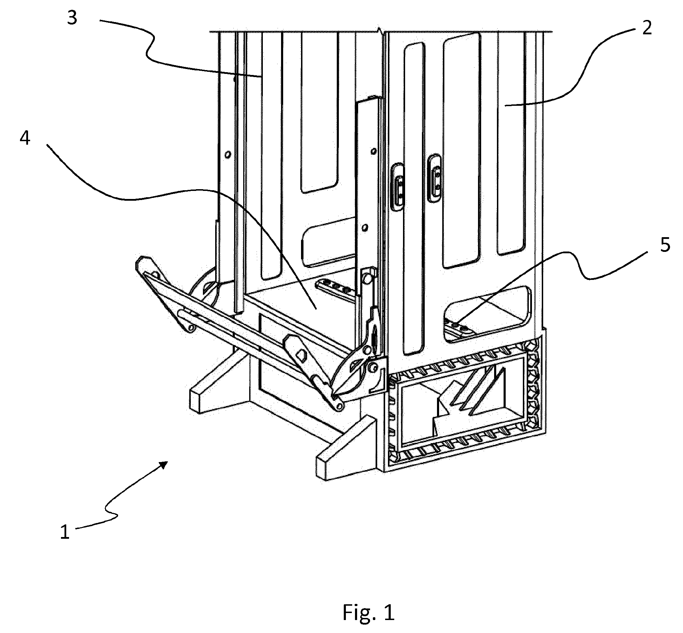

The structure comprises an external cabinet 2 having a parallelepiped shape, as partially visible in Figure 1, which circumscribes a wash chamber 3; the latter comprises a slightly concave bottom 4 for collecting the water to be drained, where in this example there is a spraying impeller 5 for water distribution.

The bottom 4 of the wash chamber 3 is made from drawn sheet metal, typically stainless steel, to the outer face of which, i.e. the one facing downwards outside the chamber 3, a heating device 10 is applied.

The latter comprises a plurality of heating wires 15 made of carbon, secured to the surface of the bottom 4 by means of an adhesive resin capable of withstanding temperatures in the range of 40-110 °C; for this purpose, a two-component or thermosetting polyurethane-based resin can be employed.

The heating wires 15 are mutually spaced with a predefined pitch that depends on several factors, including their thickness, the current flowing through them, the heat to be provided for heating the water, etc.; it must nevertheless be pointed out that the heating wires 15 may also be applied in a net-like pattern, or may be replaced with carbon sheets, i.e. laminar, as opposed to filiform, resistors.

In general, resistors made of carbon or carbon fibers suitable for this purpose are commercially available, such as, for example, those sold in Italy by company Thermal Technology or in China by companies Senphus and CIT Solution (Hong Kong).

Advantageously, according to a preferred embodiment, the bottom 4 of the wash tub 3 features a surface treatment that makes it suitable for absorbing at least a fraction of the infrared radiations emitted by the mesh of heating wires 15.

The latter, in fact, since they are made of carbon, have emission properties in the infrared range, in a range of temperatures of 40 to 110 °C, so that they can provide thermal energy not only in the form of electrically dissipated heat (Joule effect), but also in infrared radiating form for the above-mentioned temperature range.

To exploit such properties, the surface of the bottom 4 of the tub 3 is advantageously subjected to an appropriate treatment for improving its infrared radiation absorption and emission properties.

The surface treatment may be either mechanical, i.e. suitable for physically modifying the surface metals so as to limit the reflection of infrared radiation, or chemical-physical, through application or deposition of coating materials (e.g. ceramic materials), oxides, passivation, anodizing, and the like.

Thus, when water is supplied into the wash chamber 3 from the water main, it will stop on the bottom 4 and will be heated by the device 15 applied to the other face of the bottom 4 (i.e. the one external to the wash chamber 3).

The advantage of using one or more carbon resistors like the heating wire 15 (a plurality of such wires may be used, connected in parallel as shown in the drawings, or one or more single conductors arranged in a serpentine fashion) is that the entire surface of the bottom 4 of the wash chamber can be covered, so that it can be heated evenly.

In other words, the heating device 15 thus conceived avoids the need for a single big resistor included in the wash tub, as in prior-art dishwashers, providing a large heating surface (the bottom 4 of the tub) that improves the thermal exchange with the water, leading to higher efficiency.

In fact, by increasing the exchange area as in this case, it is possible to use lower temperatures of the heating wire 15 (and of the bottom 4) compared to those of a traditional resistor, the amount of transmitted heat being equal (due to the well-known relation Q= α·S·ΔT, where Q is the thermal flux per time unit, α is the transmittance, S is the exchange area, and ΔT is the temperature difference between the fluid and the hot surface).

This is advantageous in terms of energy consumption reduction because, as is known, the heat dissipated by a resistor is proportional to the square of the intensity of the current flowing through it.

From what has been described hitherto, it can be understood how the method for heating water in the dishwasher 1 can solve the technical problem initially addressed herein.

In fact, the use of resistors made of carbon, carbon fibers or the like allows exploiting to advantage the intrinsic properties of these materials, i.e. low power consumption and rapidity in reaching the desired operating temperatures.

Furthermore, this type of resistor can be applied in a distributed manner to the bottom 4 of the tub 3, as shown in the drawings, thus requiring less current intensity.

At the same time, wires made of carbon or carbon fibers have infrared emission properties that contribute to the transmission of the radiating heat to the tub bottom, so that, all other conditions being equal, they can supply more thermal energy, on the whole, than other known resistors.

Among the possible variants of the invention, it must be pointed out that in dishwashers the heating carbon wire 15 can also be applied to a pipe 3 for supplying water into the tub 3: in this case, the water can be pre-heated while it is still in the pipe that supplies the tub 3.

To this end, the heating carbon wire 15 is wound in a helical fashion (i.e. like a coil) around the water supply pipe.

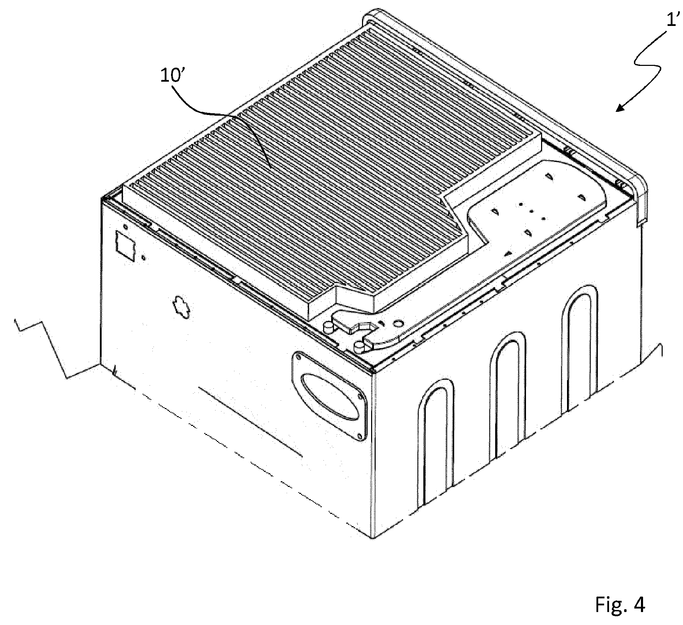

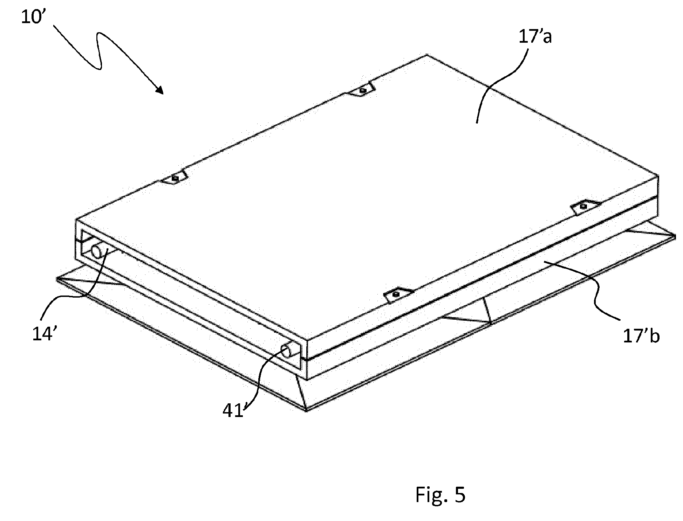

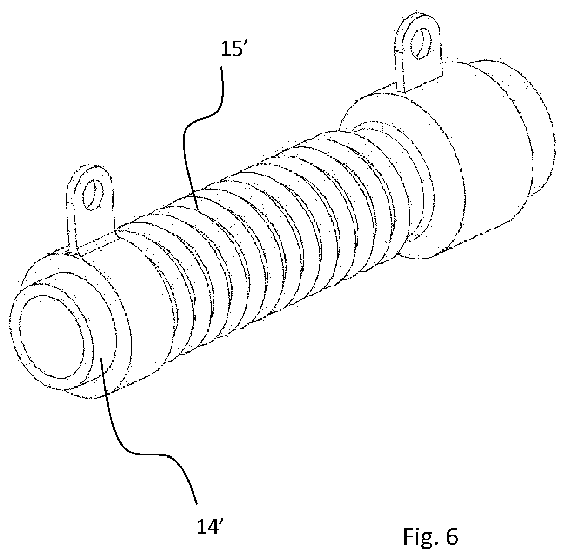

This variant is shown in Figures 4 to 8, wherein the various items are designated by means of reference numerals with an apostrophe.

In this respect, it must be pointed out that all the variants described herein and illustrated in the drawings can be combined together and applied to one household appliance.

Therefore, the following explanation should not be understood to be limited to a single variant, since it can be extended to the other variants as well, which can be combined together in any way.

With reference to Figures 4-8, there is shown a second form of application of the heating of the invention to a dishwashing machine designated as a whole as 1'; in the first figure, the dishwasher is shown with the top part removed, so as to show the underlying heating device, designated as a whole as 10'.

The heating device 10' is essentially a heat exchanger comprising a serpentine duct 14' in which the water to be heated circulates, which water comes from the water main to which the dishwasher 1' is connected, whereon a heating wire 15' made of carbon is wound in a coil fashion.

Wires suitable for the present applications are commercially available, such as, for example, those sold in Italy by company Thermal Technology or in China by companies Senphus and CIT Solution (Hong Kong).

The serpentine duct 14' may be made of a thermally conductive material, typically a metallic material such as copper, aluminium or alloys thereof, so as to promote heat transmission by conduction through its wall.

As an alternative, the duct 14' may be made of a material transparent to infrared rays or anyway to a part of the infrared radiations emitted by the heating wire 15'; in fact, since the latter is made of carbon or composite fibers thereof, it has the property of emitting this kind of radiations within a range of temperatures corresponding to those required for heating the water, i.e. 50 to 110 °C, so that this material can also provide, in addition to heating by conduction, thermal energy in radiating form.

The duct 14' may thus be made of glass-ceramic, quartz or even other synthetic materials such as PMMA (polymethylmethacrylate) and other plastic materials (e.g. polycarbonates), depending on the infrared frequencies that need to be allowed to pass.

The duct 14' is housed in a casing 17', which in the illustrated example consists of a parallelepiped panel, the walls 17'a, 17'b of which are thermally insulating, thus optimizing the thermal efficiency of the heating device 10'.

In one embodiment, in addition to being made of, or coated with, reflecting or absorbing materials, the walls 17'a, 17'b can emit radiations in the infrared range, so as to heat the inside of the panel 17' through the effect of the radiating energy that they emit.

In particular, according to a preferred embodiment, the inner face of the walls 17'a, 17'b, i.e. the one facing towards the inside of the panel 17', is coated with carbon, which is a material that absorbs infrared radiations and emits them within a range of temperatures of 60-110 °C. In a more preferable embodiment, the coating of the inner faces 17'a, 17'b of the panels is obtained by using so-called nanotubes, i.e. via deposition of nanometric layers until a predefined thickness is reached, dependent on the irradiated thermal flux.

The geometry of the system made up of the serpentine duct 14' and the casing 17' may vary from the parallelepiped one shown in the drawings; for example, it may be cylindrical.

Furthermore, as an alternative to or in combination with the above, the panel 17', the serpentine duct 14' and the carbon wire 15' wound thereon may be enclosed into a protective, waterproof, thermally and/or electrically insulating sheath.

A sheath having such properties can be made from braided or textile material of fiberglass, polyester or the like impregnated with resin, or from silicone, polyurethane or another material suitable for protecting and insulating the duct 14' and the carbon wire 15'.

Moreover, in order to further promote the thermal exchange between the duct 14' and the heating wire 15', on the outer wall of the duct there is a helical thread 18' acting as a seat for the heating wire 15'.

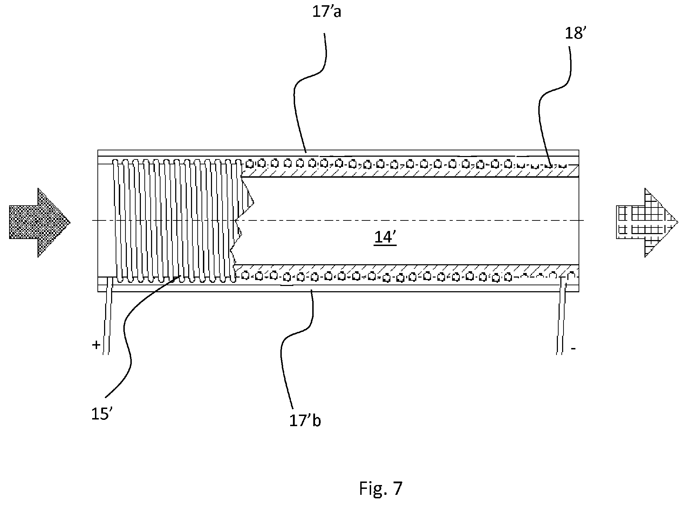

The helical thread 18', clearly visible in Figure 7, which shows a part of the duct 14', ensures a more intimate and stable contact between the wire 15' and the duct 14', thereby improving the thermal exchange.

In fact, as can be easily understood, the heating wire 15' will remain firmly wound in the groove of the thread 18', without being allowed to move or anyway without the risk that the wound spiral might become loose, which would result in less contact and thermal exchange with the duct 14'.

It is also worth adding that the stability of the coupling between the wire 15' and the duct 14' is important for a household appliance like a dishwasher, because it is subject to strong vibrations in operation or when the loading door is closed or opened.

Furthermore, it should be noted that the thread 18' is also useful for increasing the contact area between the duct 14' and the wire 15': for this purpose, the shape of the cross-section of the thread 18' is conjugated to the circular one of the wire 15' so as to partially embrace it, so that mutual contact will occur for substantially half the circumference of the wire 15'.

The operation of the heating device 10' according to this embodiment can be easily understood; in fact, the main water supplied to the dishwasher 1' flows in the duct 14', which is heated by the wire 15' wound thereon.

In turn, the duct 14' heats the water, which comes out of the device 10' at the temperature required for the operation of the dishwasher 1'.

To this end, the latter is equipped with all means (sensors, user interface with buttons or knobs, display, etc. for setting the operating cycle of the dishwasher, a control unit with a microprocessor or the like for controlling the functions of the machine, etc.) necessary for adjusting and controlling the water temperature.

In practice, the user of the dishwasher sets a wash cycle in a manner wholly similar to the traditional procedure required by prior-art dishwashers: in this case, however, power will be supplied, in order to heat the water, to the heating wire 15' made of carbon, as opposed to the usual electric resistor made of tungsten or the like.

The carbon wire 15' heats the wall of the duct 14' in which the water is flowing, until the temperature set by the user is reached, depending on the selected wash cycle; for this reason, the duct 14' is preferably made from metal, such as copper, aluminium or the like, so as to be thermally conductive, or it may be made from a material transparent to the infrared radiations emitted by the heating wire 5, e.g. quartz or glass-ceramic or PMMA (polymethylmethacrylate).

In this case, the configuration of the heating device 10' with the serpentine duct 14' turns out to be particularly advantageous, in that such a duct can contain a preset volume of water within a relatively small space.

In other words, the serpentine duct 14' acts as an accumulation chamber for a preset quantity of water, depending on the wash requirements, so that the heating thereof can be handled effectively.

In particular, the water can be kept in the heating device 10' for the time necessary for reaching the desired (i.e. set) temperature for an operating cycle of the dishwasher 1'; when such temperature is reached, the water will be delivered into the wash chamber.

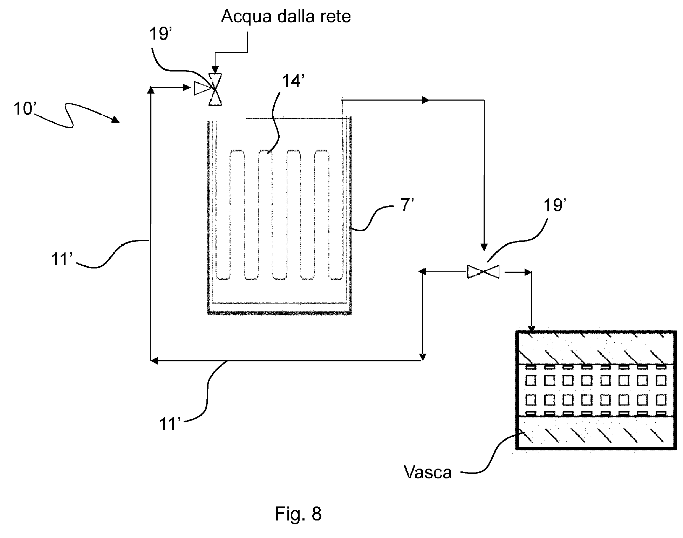

Therefore, the water may be stopped by valves 19' within the heating device 10' for a variable time before being fed into the tub as necessary (as shown in Figure 8), or it may be made to flow continuously without stopping unless necessary (e.g. during the rinse).

As an alternative to or in combination with these modes of operation, it is possible to have the water flow multiple times through the heating device 10' until it reaches the desired temperature, by causing it to circulate within the duct 14'; in this case as well, fluid intercepting and conveying means are provided, such as valves 19', branching and/or bypass ducts 11', suitable for returning the fluid into the device 10'.

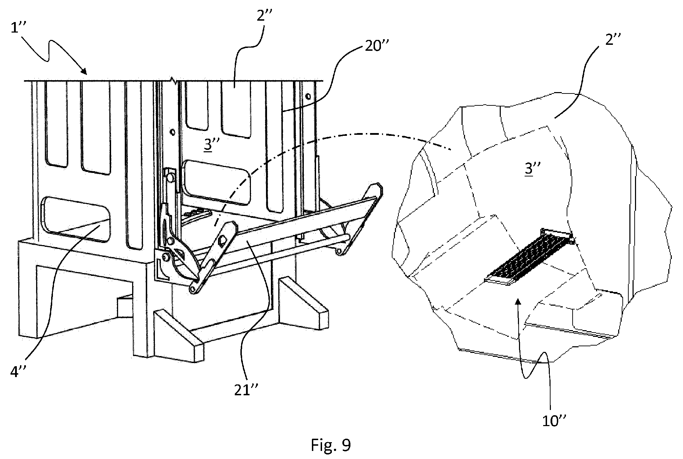

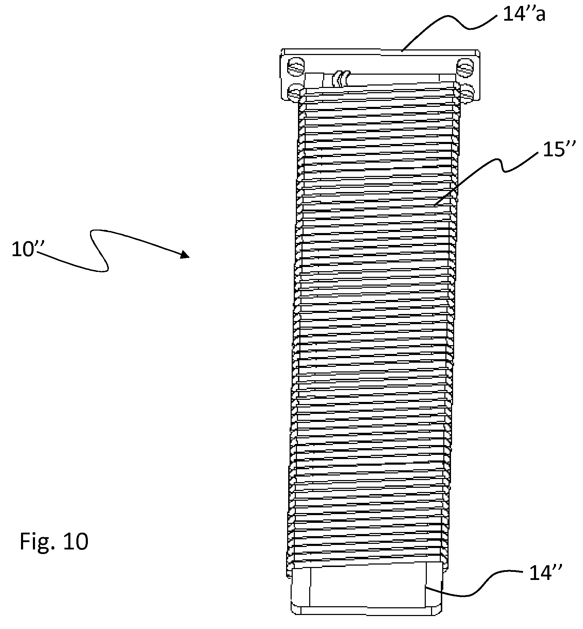

In this regard, one possible variant embodiment of the present invention must be pointed out, as shown in Figures 9 and 10, wherein two apostrophes have been added to the reference numerals.

As can be seen, the dishwasher 1" has the usual cabinet-like external structure 2", with a load opening 20" at the front, closed by a door 21" (in Fig. 9 only some parts of the structure 2" and of the door 22" are shown for simplicity).

The structure 2"houses the wash tub 3", shown without the internal parts to make the heating device 10" visible.

The latter is more clearly visible in the enlarged detail of Figure 9 and in Figure 10: it comprises a heating wire 15" made of carbon, wound on a support 14" consisting, in this case, of a metal plate or anyway a plate made of thermally conductive material, preferably with infrared emission properties.

As an alternative, the support 14" may be made of, or coated with, carbon, so as to be able to emit infrared radiations within the preferred temperature range of 40 to 110 °C; the coating can be obtained by deposition of nanometric layers (e.g. nanotubes), until a certain thickness is reached, which may range from a few fractions of a millimeter to a few millimeters, depending on the required conditions.

Advantageously, a protective layer transparent to infrared radiations is applied onto the support 14", e.g. a waterproofing paint, or a casing made of quartz, polymethylmethacrylate (PMMA) or the like, for protecting the underlying carbon.

In this variant of the invention, the carbon wire 15" is covered with a waterproof sheath made of plastic material of the type commonly used for electric conductors and transparent to infrared rays, or anyway characterized by low infrared absorption.

The support 14" is secured in a cantilever fashion to the back wall of the tub 3", near the bottom thereof, where the wash water to be heated is collected; to this end, the support 14" may be secured in any way deemed appropriate.

In this case, the support 14" is provided with a fitting base 14a", which is fastened to the back wall of the tub 3" by means of screws; of course, other solutions may be adopted, such as, for example, welding the plate 14a", if the tub 3" is made of metallic material, or moulding, if the tub is made of plastic material.

The low position of the heating device 10" in the tub 3" ensures that the heating wire 15" will stay immersed in water, just like the common electric resistors currently in use.

Unlike the latter, however, the carbon wire 15" can also heat the water by irradiation in the infrared range, as previously explained, in addition to providing heat by means of electric power dissipation through the Joule effect: it follows that the same amount of heat can be supplied to the wash water, on the whole, as by using the normal heating resistors currently known in the art, while however requiring less current intensity (and hence consuming less) than the latter.

It must finally be pointed out that the above-described principles of the invention can be extended to the case in which an aeriform fluid needs to be heated for drying a load or for other purposes.

This is the case, for example, of dishwashers wherein a final step of drying the load (dishes, flatware, glasses, etc.) is executed, during which the electric resistor 15, 15' or 15" heats the air inside the wash tub 3, 3", thus causing the water deposited on the load to evaporate until it is completely dry.

Air heating can be provided, at least partly, by the heat generated by one or more electric resistors 15, 15', 15" made of carbon, carbon fiber or the like, by current dissipation (Joule effect) and/or by irradiation in the infrared range, which interact with the water molecules deposited on the crockery and/or with steam molecules in the tub.

The electric resistors 15, 15', 15" may be arranged either inside or outside the wash tub 3, 3", as previously described, or they may be incorporated into a cover, e.g. comprising a textile layer or the like acting as a cover enveloping at least partly the outer walls of the tub, so as to heat them by conduction, thus heating by convection the inner volume of the tub, where the crockery to be dried is located.

The inner surface of the dishwasher door (inner door panel), which acts as a tub closing wall, may also be covered in the same way.

If the whole outer surface of the tub is not covered, i.e. if only some predefined surfaces are covered, the uncovered surface(s) (e.g. the rear surface of the tub) will be colder and will act as a condensing surface promoting condensation of steam in the form of condensed water drops, which will then slide by gravity into the sump of the dishwasher, to be finally evacuated by the drain pump.

According to a preferred embodiment, in this case the wash tub is made of a material transparent to infrared radiations, e.g. a plastic material such as PMMA, Plexiglas and the like.

All of these variants will fall within the scope of the following claims.

## Claims

1. Method for heating a fluid in a household appliance (1), such as a dishwasher, **characterized in that** it uses, as a heating element, at least one resistive element (15) made of a material suitable for providing thermal energy by electric dissipation and irradiation throughout the range of fluid heating temperatures.

2. Method according to claim 2, wherein the resistive element (15) is made of carbon, carbon fiber or the like.

3. Method according to claims 1 or 2, wherein said at least one resistive element (15) is applied to the bottom (4) of the wash tub (3) of the household appliance.

4. Method according to any one of claims 1 to 3, wherein the heated fluid comprises one or more of water, air and steam.

5. Household washing appliance, such as a dishwasher or the like, comprising a wash tub (3; 3"), heating means (10; 10') for heating a fluid in the wash tub (3; 3"), **characterized in that** the fluid heating means comprise at least one resistive heating element (15; 15') made of carbon, carbon fiber and the like.

6. Household appliance according to claim 5, wherein the resistive element (15) is applied to the bottom (4) of the tub (3) and covers a prevalent portion thereof.

7. Household appliance according to claim 6, wherein the portion of the bottom (4) of the tub (3) whereon the resistive element (15) is applied is subjected to a surface treatment that provides it with emission properties in the infrared range.

8. Household washing appliance according to any one of claims 5, 8 or 7, comprising a washing water duct (4; 14'), wherein at least a portion thereof supports said resistive heating element (5; 15') made of carbon, carbon fiber or the like.

9. Household appliance according to claim 8, wherein the duct comprises at least one portion of a pipe (14') wherein water circulates, around which a heating wire (15') made of carbon, carbon fiber or the like is wound.

10. Household appliance according to claims 8 or 9, wherein on the outside of the duct (14') there is a helical thread (18') housing a heating wire (15') made of carbon, carbon fiber or the like.

11. Household appliance according to any one of claims 8 to 10, comprising water intercepting means (19') and/or water conveying means (11'), adapted to recirculate the water into a portion of the duct (14') that supports the heating wire (15').

12. Household appliance according to any one of claims 8 to 11, wherein a portion of the duct (14') that supports the heating wire (15') extends substantially as a serpentine.

13. Household appliance according to any one of claims 8 to 12, wherein a portion of the duct (14') that supports the heating wire (15') is housed in a casing (17') with insulating properties and/or reflecting the infrared radiations inside of it, preferably made of, or coated with, carbon.

14. Household appliance according to any one of claims 5 to 13, wherein the heating means (10") comprise at least one resistive element (15") made of carbon, carbon fiber or the like, arranged at the bottom of the wash tub (3"), thus being immersed when there is water on the bottom of the tub during the wash cycle.

15. Household appliance according to claim 14, wherein the resistive element comprises a wire (15") wound around a support (14") extending in a cantilever fashion over the bottom of the wash tub (3").

16. Household appliance according to any one of claims 5 to 15, wherein the means for heating the fluid in the wash tub (3; 3") comprise a covering that covers, at least partially, the outer walls of the tub, so as to heat them by conduction, thus heating by convection the inner volume of the tub that contains the crockery to be dried.

17. Household appliance according to claim 16, wherein the covering covers predefined walls of the wash tub (3; 3") or portions thereof, so as to obtain, on the uncovered surface(s), a colder surface(s) to be used as a steam condensing surface(s).

18. Household appliance according to any one of claims 5 to 17, wherein the wash tub (3; 3") is made of a material transparent to infrared radiations, such as a plastic material.
